# DEMANDE DE BREVET EUROPEEN

(11) **EP 1 376 514 A1**
(43) Date de publication de la demande: **02.01.2004**
(21) Numéro de dépôt: 03291513.4
(22) Date de dépôt: 20.06.2003
(51) Int. Cl.: G08G 1/16

(54) **Procédé et dispositif d'evaluation de la position d'un véhicule sur une voie de circulation d'une chaussée**

(30) Priorité: 20.06.2002 FR 0207608
(71) Demandeur: Renault s.a.s., 92100 Boulogne Billancourt (FR)
(72) Inventeur: Capperon, Stéphane, 92500 Rueil Malmaison (FR); Raffin, Jean-Luc, 92210 Saint CLoud (FR)
(74) Mandataire: Davies, Owen Robert Treharne

(57) **Abrégé**

La chaussée présente des premier (3a) et deuxième (3b) bords et est délimitée par des première (4a) et deuxième (4b) lignes formées sur la chaussée (2). On évalue la position du véhicule (1) à l'aide de la mesure d'au moins un des écarts du véhicule (1) aux première (4a) et deuxième (4b) lignes.

Suivant l'invention, à la non détection d'au moins une desdites lignes (4a, 4b), on substitue à la mesure de l'écart correspondant celle de la distance du véhicule (1) à celui desdits bords (3a, 3b) qui est adjacent à la ligne (4a, 4b) non détectée.

## Description

La présente invention est relative à un procédé et un dispositif d'évaluation de la position d'un véhicule automobile sur une voie de circulation d'une chaussée présentant des premier et deuxième bords et délimitée par des première et deuxième lignes formées sur ladite chaussée et, plus particulièrement, à un tel procédé suivant.lequel on évalue ladite position à l'aide de la mesure d'au moins un des écarts dudit véhicule auxdites première et deuxième lignes.

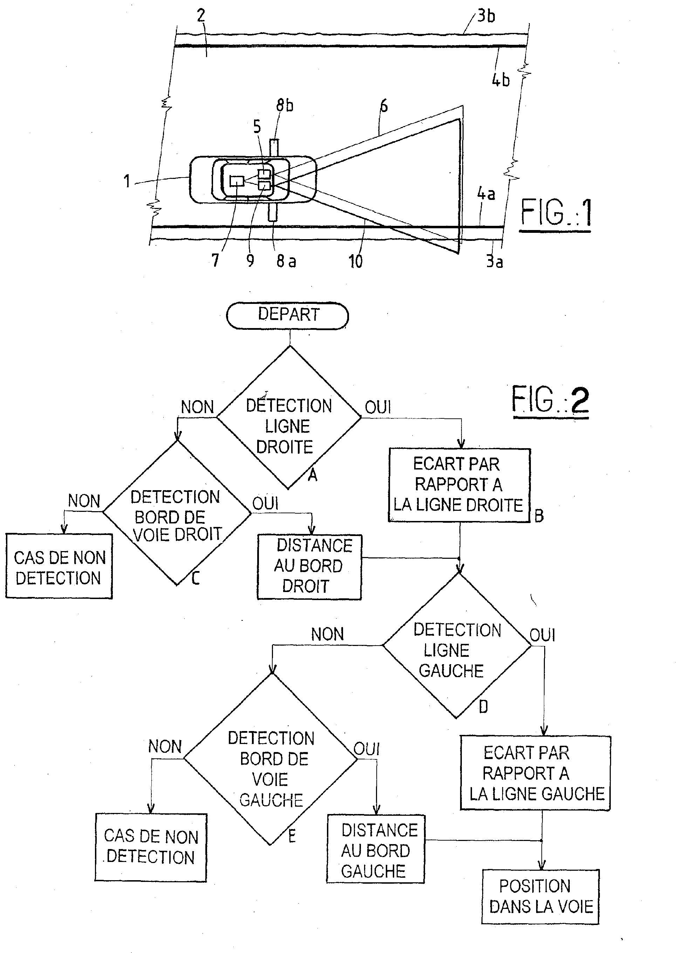

On a représenté à la figure 1 du dessin annexé un véhicule automobile 1 en circulation sur une voie d'une chaussée 2 présentant des premier et deuxième bords 3a, 3b respectivement, ladite chaussée 2 portant classiquement des première et deuxième lignes 4a, 4b adjacentes aux bords 3a, 3b, respectivement, ces lignes étant d'une couleur, blanche par exemple, contrastant fortement avec celle de la chaussée. Elles sont alors bien visibles par le conducteur du véhicule et constituent donc une aide optique au guidage du véhicule sur une voie de circulation.

On a conçu des dispositifs permettant d'évaluer la position du véhicule dans cette voie pour commander éventuellement une correction automatique de la trajectoire du véhicule et/ou pour alerter le conducteur sur l'imminence d'une déviation dangereuse de cette trajectoire.

Ces dispositifs comprennent des moyens de détection des lignes, embarqués dans le véhicule, constitués par exemple d'une caméra vidéo classique dont l'objectif vise notamment la chaussée, en avant du véhicule. Une unité de traitement des images saisies par la caméra permet d'extraire les lignes de ces images et d'en déduire la position du véhicule par rapport à ces lignes.

La détection des lignes peut aussi s'opérer à l'aide d'un dispositif, également embarqué dans le véhicule, composé d'une diode émettrice d'un faisceau laser infra-rouge, ce dernier étant différemment réfléchi par la chaussée et par une ligne, le rayonnement réfléchi étant détecté par une barrette de photodiodes délivrant des signaux permettant de mesurer la position de la ligne par rapport au véhicule.

Les dispositifs décrits ci-dessus ne sont pleinement efficaces que si la chaussée est munie de lignes au voisinage de ses deux bords et si ces lignes sont de bonne qualité. Dans le cas contraire les informations qu'ils délivrent ne sont pas fiables.

De surcroît ces dispositifs ne fonctionnent pas, ou mal, la nuit ou en cas de mauvais temps, particulièrement celui qui utilise une caméra vidéo, à CCD par exemple.

La présente invention a précisément pour but de fournir un procédé et un dispositif d'évaluation de la position d'un véhicule sur une voie de circulation d'une chaussée, qui ne présente pas les inconvénients précités et qui, en particulier, soient efficaces même en cas de marquage défectueux des lignes sur la chaussée ou en cas de mauvais temps.

On atteint ce but de l'invention, ainsi que d'autres qui apparaîtront à la lecture de la description qui va suivre, avec un procédé d'évaluation de la position d'un véhicule automobile sur une voie de circulation d'une chaussée présentant des premier et deuxième bords et délimitée par des première et deuxième lignes formées sur ladite chaussée, suivant lequel on évalue ladite position à l'aide de la mesure d'au moins un des écarts dudit véhicule auxdites première et deuxième lignes, ce procédé étant remarquable en ce que, à la non détection d'au moins une desdites lignes, on substitue à la mesure de l'écart correspondant celle de la distance dudit véhicule à celui desdits bords qui est adjacent à la ligne non détectée.

Comme on le verra plus loin en détail, en suppléant ainsi à une défaillance de la détection des lignes par une détection des bords de la chaussée, on fiabilise l'évaluation de la position du véhicule. On peut en outre assurer cette évaluation même de nuit ou par mauvais temps.

Selon d'autres caractéristiques, optionnelles, de la présente invention :
- on mesure successivement l'écart du véhicule auxdites première et deuxième lignes,
- à la non détection de la distance à substituer à un écart non mesuré, on émet un signal d'alerte du conducteur dudit véhicule.

Pour la mise en oeuvre de ce procédé, l'invention fournit un dispositif comprenant des moyens de mesure de l'écart séparant le véhicule d'au moins une des lignes formées sur la chaussée et des moyens pour en déduire une évaluation de la position du véhicule sur la voie sur laquelle il circule, ce dispositif étant remarquable en ce qu'il comprend en outre des moyens de mesure de la distance séparant ledit véhicule d'au moins un des bords de ladite chaussée et des moyens pour substituer ladite mesure de distance à une mesure d'écart correspondante quand cette dernière n'est pas réalisée.

D'autres caractéristiques et avantages de la présente invention apparaîtront à la lecture de la description qui va suivre et à l'examen du dessin annexé dans lequel :
- la figure 1 est un schéma d'un véhicule équipé du dispositif suivant l'invention, en mouvement sur une voie de circulation d'une chaussée, schéma déjà partiellement décrit en préambule de la présente description, et
- la figure 2 est un organigramme du procédé d'évaluation mis en oeuvre par le dispositif représenté à la figure 1.

On se réfère à cette figure pour décrire le dispositif d'évaluation suivant l'invention. Celui-ci comprend des moyens de mesure de l'écart séparant le véhicule 1 de la ligne 4a adjacente au véhicule et, éventuellement, également de la ligne 4b adjacente au bord 3b de la chaussée qui est opposée au bord 3a adjacent à la ligne 4a.

Ces moyens peuvent comprendre, classiquement, une caméra vidéo 5 embarquée dans le véhicule, dont le champ 6 de l'objectif couvre au moins la ligne 4a, comme représenté. Le traitement des images saisies par la caméra, par extraction de contour, permet alors de définir la position de la ligne 4a dans ce champ, et donc la position du véhicule par rapport à cette ligne. Ce traitement peut s'opérer dans des moyens 7 connectés à la caméra 5 et conçus pour déduire la position du véhicule 1 d'un tel traitement d'images.

Le champ couvert par l'objectif pourrait aussi couvrir simultanément les deux lignes 4a, 4b, de manière à permettre la localisation du véhicule 1 par rapport à ces deux lignes.

En variante, on pourrait remplacer la caméra 6 par des moyens de détection de lignes par faisceau laser infra-rouge, tel que décrits en préambule de la présente description et disposés de part et d'autre du véhicule, en 8a, 8b comme représenté.

Les moyens décrits ci-dessus sont efficaces pour déterminer la position du véhicule sur la chaussée quand les lignes sont bien apparentes, c'est à dire en bon état, et ceci essentiellement de jour. De nuit, et/ou par mauvais temps, on a observé que les informations fournies par ces moyens manquent de fiabilité.

Suivant la présente invention, on lève cette difficulté en équipant le véhicule d'un dispositif d'évaluation de la position du véhicule comprenant en outre des moyens de mesure d'au moins la distance séparant le véhicule du bord de la chaussée qui est adjacent à ce véhicule, soit du bord 3a sur la figure 1. Ces moyens de mesure peuvent être constitués, par exemple, par une caméra vidéo 9, dite thermique, sensible au rayonnement infra-rouge et par des moyens de traitement des images infra-rouge saisies par la caméra 9 pour en tirer une mesure de la distance du véhicule au bord 3a, ces moyens étant prévus dans les moyens de traitement 7 par exemple. Ces derniers comprennent en outre des moyens pour substituer la mesure de distance ainsi obtenue à une mesure d'écart du véhicule par rapport à la ligne 4a, quand il s'avère que cette mesure d'écart ne peut être obtenue pour l'une quelconque des raisons données plus haut.

La caméra thermique 9 est équipée d'un objectif dont le champ 10 couvre au moins le bord 3a de la chaussée, comme représenté à la figure 1. Il peut aussi couvrir les deux bords 3a, 3b. La caméra est sensible à la différence de température de surface de la chaussée et de la partie adjacente à la chaussée, recouverte d'un matériau (terre, herbe, etc...) différent de celui recouvrant la chaussée. Les images transmises visualisent ainsi le bord de la chaussée, de jour comme de nuit, et même par mauvais temps.

Le dispositif ainsi équipé est en mesure d'exécuter le procédé, suivant l'invention, d'évaluation de la position du véhicule, illustré par l'organigramme de la figure 2 à laquelle on se réfère maintenant pour décrire ce procédé.

Sur cet organigramme, les lignes et bords "droit" et "gauche" sont ceux affectés des indices a et b respectivement.

Le véhicule 1 roulant dans une voie adjacente à la ligne "droite" 4a, on recherche, à l'étape A de l'organigramme, si cette ligne est détectée par les moyens 5 (ou 8a).

Dans l'affirmative, à l'étape B, on mesure l'écart séparant ce véhicule et cette ligne à l'aide des moyens de traitement 7.

Dans la négative, suivant l'invention, on recherche si le bord droit 3a de la chaussée est détecté par la caméra infra-rouge 9 et les moyens de traitement 7 (étape C).

Si la distance de ce bord au véhicule est mesurable, on substitue la mesure de cette distance à l'écart que l'on aurait du obtenir à l'étape B. Dans le cas contraire (non détection du bord) un message d'alerte est émis à l'intention du conducteur pour le mettre en garde sur le fait que le dispositif suivant l'invention se trouve dans des circonstances, exceptionnelles, où il n'est plus opérationnel. Tout moyen de correction automatique de la position du véhicule sur la chaussée exploitant des informations venues de ce dispositif devient en effet alors inopérant et doit être remplacé par un surcroît de vigilance de la part du conducteur.

C'est là une situation que l'on rencontre quand la chaussée est couverte de neige, par exemple.

L'écart du véhicule à la ligne droite, ou sa distance au bord droit, étant relevé, on complète les informations nécessaires à la détermination du véhicule en cherchant à détecter la ligne gauche 4b (étape D).

Si celle-ci est détectée, l'écart du véhicule par rapport à la ligne gauche est mesuré et, connaissant à la fois les écarts du véhicule par rapport aux lignes droite et gauche, les moyens 7 déterminent par le calcul, avec précision, la position du véhicule dans la voie qu'il occupe.

Si la ligne gauche n'est pas détectée, on cherche à détecter le bord gauche 3b et sa distance au véhicule pour substituer, suivant l'invention, la mesure de cette distance à la mesure de l'écart qui n'a pu être obtenu à la suite de l'étape D.

Connaissant l'écart du véhicule à la ligne gauche, ou sa distance au bord gauche, et les informations correspondantes du côté droit réunies antérieurement à l'étape D, les moyens 7 évaluent aisément la position du véhicule sur sa voie de circulation.

Si le bord gauche n'est pas détecté, un signal d'alerte est émis à l'intention du conducteur du véhicule.

Il apparaît maintenant que l'invention permet bien d'atteindre le but fixé, à savoir fournir une procédé et un dispositif d'évaluation de la position d'un véhicule sur une chaussée qui reste efficace dans des conditions (lignes dégradées, mauvais temps, etc...) où les procédés de la technique antérieure ne l'étaient pas. On remarquera à cet égard que la présence dans le dispositif suivant l'invention, de moyens de détection sensibles à des rayonnements de bandes spectrales différentes (domaine visible, domaine infra-rouge) en élargit le domaine d'utilisation.

## Revendications

1. Procédé d'évaluation de la position d'un véhicule automobile (1) sur une voie de circulation d'une chaussée (2) présentant des premier (3a) et deuxième (3b) bords et délimitée par des première (4a) et deuxième (4b) lignes formées sur ladite chaussée (2), suivant lequel on évalue ladite position à l'aide de la mesure d'au moins un des écarts dudit véhicule (1) auxdites première (4a) et deuxième (4b) lignes,
**caractérisé en ce que**, à la non détection d'au moins une desdites lignes (4a, 4b), on substitue à la mesure de l'écart correspondant celle de la distance dudit véhicule (1) à celui desdits bords (3a, 3b) qui est adjacent à la ligne (4a, 4b) non détectée.

2. Procédé conforme à la revendication 1, **caractérisé en ce qu'**on mesure successivement l'écart du véhicule (1) auxdites première (4a) et deuxième (4b) lignes,

3. Procédé conforme à l'une quelconque des revendications 1 et 2, **caractérisé en ce que**, à la non détection de la distance à substituer à un écart non mesuré, on émet un signal d'alerte du conducteur dudit véhicule (1).

4. Dispositif pour la mise en oeuvre du procédé conforme à l'une quelconque des revendications 1 à 3, comprenant des moyens de mesure (5; 8a, 8b) de l'écart séparant le véhicule d'au moins une desdites lignes formées sur ladite chaussée et des moyens (7) pour en déduire une évaluation de la position dudit véhicule sur ladite voie, **caractérisé en ce qu'**il comprend en outre des moyens de mesure (9) de la distance séparant ledit véhicule (1) d'au moins un des bords (3a, 3b) de ladite chaussée (2) et des moyens pour substituer ladite mesure de distance à une mesure d'écart correspondante quand cette dernière n'est pas réalisée.

5. Dispositif conforme à la revendication 4, **caractérisé en ce que** lesdits moyens de mesure d'écart sont choisis parmi : une caméra vidéo (5), des moyens de détection par faisceau laser infra-rouge (8a, 8b).

6. Dispositif conforme à la revendication 4 ou 5, **caractérisé en ce que** lesdits moyens de mesure de distance (9) sont constitués par une caméra vidéo sensible au rayonnement infra-rouge.
